# EUROPEAN PATENT SPECIFICATION

(11) **EP 1 196 717 B1**
(45) Date of publication and mention of the grant of the patent: **10.01.2007**
(21) Application number: 00963256.3
(22) Date of filing: 28.06.2000
(51) Int. Cl.: F21V 8/00

(54) **CONDENSING AND COLLECTING OPTICAL SYSTEM USING PARABOLIC REFLECTORS OR A CORRESPONDING ELLIPSOID/HYPERBOLOID PAIR OF REFLECTORS**
KONDENSIERENDES UND SAMMELNDES OPTISCHES SYSTEM, WELCHES PARABOLREFLEKTOREN ODER EIN KORRESPONDIERENDES ELLIPTISCH-HYPERBOLOID-FÖRMIGES REFLEKTORPAAR VERWENDET
SYSTEME CONDENSATEUR COLLECTEUR OPTIQUE A MIROIRS PARABOLIQUES OU EN PAIRES ELLIPSOIDE/HYPERBOLOIDE

(30) Priority: 01.07.1999 US 141832 P; 28.01.2000 US 178700 P; 29.03.2000 US 192879 P
(43) Date of publication of application: 17.04.2002
(60) Divisional application: 06118768.8
(73) Proprietor: Wavien, Inc., Santa Clarita, CA 91355-1137 (US)
(72) Inventor: LI, Kenneth, K., Arcadia, CA 91006 (US)
(74) Representative: Grynwald, Albert
(86) International application number: PCT/US2000/017687
(87) International publication number: WO 2001/002774

(56) References cited:
- US-A- 4 473 295
- US-A- 5 191 393
- US-A- 5 430 634
- US-A- 5 707 131

## Description

### Field of the Invention

This invention relates to systems for collecting and condensing electromagnetic radiation, particularly a system incorporating parabolic reflectors for collecting radiation emitted from a radiation source and focusing the collected radiation onto a target.

### Background of the Invention

The functional objective for systems that collect, condense, and couple electromagnetic radiation into a standard waveguide, such as a single fiber or fiber bundle, or outputs to a homogenizer of a projector, is to maximize the brightness (i.e., maximize the flux intensity) of the electromagnetic radiation at the target. The prior art teaches the use of so-called on-axis reflector systems involving spherical, ellipsoidal, and parabolic reflectors and off-axis reflector systems involving spherical, toroidal, and ellipsoidal reflectors. Where the target has dimensions that are similar to the size of the arc gaps of the electromagnetic radiation source, off-axis reflector systems achieve higher efficiency and brightness at the target than on-axis systems, thereby maximizing the amount of light that can be collected by a fiber optic target. For targets having dimensions that are much larger than the arc gaps of the electromagnetic source, both on-axis and off-axis reflector systems are effective for collecting, condensing, and coupling the radiation from a radiation source into a wave guide.

A disadvantage of on-axis systems is that they inherently redirect the radiation from the radiation source into larger images that are dependent on the direction of the emitted radiation, thus defeating the goal of concentrating the radiation into the smallest possible spot when the radiation source is incoherent. For example, a known on-axis ellipsoidal system produces magnifications that range from 2 to 8, dependent on the emission angle of the electromagnetic radiation. The variously magnified radiation beams are superimposed upon one another, thereby causing distortion and magnification of the collected image.

Furthermore, an ellipsoidal collecting and condensing system does not produce parallel (i.e., collimated) radiation beams. This is a disadvantage because collimated beams can facilitate filtering of the collected radiation when needed.

In known on-axis parabolic systems, the divergence of the reflected beam is also dependent on the angle of emission from the radiation source. Furthermore, such systems require the use of one or more focusing lens, which, under perfect conditions, produce a distorted image, and, in reality, typically produce badly aberrated images which effectively increase the image size and reduce brightness, or flux intensity. Furthermore, the outputs of an on-axis system are always circularly symmetric and, therefore, may not be suitable for non-circular targets.

U.S. Patent No. 4,757,431 describes an improved condensing and collecting system employing an off-axis spherical concave reflector which enhances the maximum flux intensity illuminating a small target and the amount of collectable flux density by the small target. This system was further improved in U.S. Patent No. 5,414,600, in which the off-axis concave reflector is an ellipsoid, and U.S. Patent No. 5,430,634, in which the off-axis concave reflector is a toroid. Although the toroidal system described in the '634 patent corrects for astigmatism, and the ellipsoidal system of the '600 patent provides a more exact coupling than the spherical reflector of the '431 patent, each of these systems requires the application of an optical coating onto a highly curved reflective surface. Applying optical coatings to such curved surfaces is expensive, and achieving a uniform coating thickness is difficult. Furthermore, in such systems the source image is focused directly from the source to the target in a relatively small space, thereby making the insertion of other optical elements, such as filters and attenuators, difficult due to the lack of space.

In the field of spectroscopy, it is necessary to focus electromagnetic radiation down to a very small spot at a sample under test and to thereafter collect the radiation reflected by the sample. Off-axis parabolic reflectors have been used for this purpose. U.S. Patent No. 3,986,767 shows a system in which a parallel beam is focused into a small spot directly onto a sample under test using an off-axis paraboloid. U.S. Patent No. Re 32,912 shows the use of paraboloids whereby light is focused onto a sample under test using one reflective paraboloid, and the light from that same focus is collected using a second reflective paraboloid. U.S. Patent No. 4,473,295 describes yet another configuration for using reflective paraboloids to focus and collect radiation onto and from a sample under test.

U.S. Patent No. 5,191,393, and its corresponding European Patent No. 0 401 351 B1, describe a system whereby light is transmitted from a location outside a cleanroom to a location inside the cleanroom for performing optical measurement of small features. One of the configurations described for collecting and transmitting light includes an arc lamp, two parabolic reflectors, a single fiber target, and transmissive dichroic filters for filtering out unnecessary wavelengths. A first parabolic reflector collects light that is reflected from the source off of a filtering reflector and creates a collimated beam. The collimated beam may pass through one or more additional filters before impinging on the second parabolic reflector, which collects and focuses the collimated beam into the single-fiber target. None of these references, however, describes a system for achieving unit magnification between the source and the focused image so as to obtain the maximum flux intensity with the minimum distortion at the target.

Therefore, there remains a need to provide a method of collecting and concentrating electromagnetic radiation using parabolic reflectors that maximizes the flux intensity of the focused radiation beam at the target.

### Summary of the Invention

In accordance with aspects of the present invention, an improved system for collecting and condensing electromagnetic radiation employs parabolic reflectors and achieves unit magnification, or near unit magnification, between a source image and a focused image at a target, thereby producing maximum focused intensity at the target. In particular, the present invention is directed to an optical device for collecting electromagnetic radiation from a source of electromagnetic radiation and focusing the collected radiation onto a target to be illuminated with at least a portion of the electromagnetic radiation emitted by the source. The device includes a collimating reflector and a focusing reflector. The collimating reflector comprises at least a portion of a paraboloid of revolution and has an optical axis and a focal point on the optical axis. A source located proximate the focal point of the collimating reflector produces collimated rays of radiation reflected from the collimating reflector in a direction parallel to the optical axis. The focusing reflector comprises at least a portion of a paraboloid of revolution and has an optical axis and a focal point on the optical axis. The focusing reflector is positioned and oriented with respect to the collimating reflector so that the collimated rays of radiation reflected from the collimating reflector are reflected by the focusing reflector and focused toward a target located proximate the focal point of the focusing reflector. The collimating reflector and the focusing reflector have slightly different shapes or substantially the same size and shape and may be oriented optically about symmetrically with respect to each other so that each ray of radiation reflected by a surface portion of the collimating reflector is reflected by a corresponding surface portion of the focusing reflector toward the target to achieve substantially a unit magnification.

A retro-reflector may be used in conjunction with the collimating reflector to capture radiation emitted by the source in a direction away from the collimating reflector and reflect the captured radiation back through the source (i.e., through the focal point of the collimating reflector) toward the collimating reflector to thereby increase the intensity of the collimated rays reflected therefrom.

The collimated and focusing reflectors can be arranged in an opposed, facing relationship with their respective optical axes collinearly arranged, or they can be arranged with their optical axes arranged at an angle with respect to each other, in which case a redirecting reflector is employed to redirect the collimated rays reflected by the collimating reflector toward the focusing reflector.

Alternately, the collimating reflector and the focusing reflector comprise an ellipsoid/hyperboloid pair with one of the collimating and focusing reflectors having a substantially ellipsoid shape, and the other of the collimating and focusing reflectors having a corresponding substantially hyperboloid shape with each reflector of the ellipsoid/hyperboloid pair having a corresponding size and optical orientation with respect to each other so that each ray of radiation reflected by a surface portion of the collimating reflector is reflected by a corresponding surface portion of the focusing reflector toward the target so as to preferably achieve about unit magnification between the source and an image focused onto the target. Depending on applications, larger or smaller magnifications other than one can be used resulting in reduced brightness, i.e., magnifications of from about 0.5 to about 5.

Filters or other optical elements can be arranged between the collimating and focusing reflectors.

### Description of the Drawings

Embodiments of the present invention will be described with reference to the attached drawings in which like components or features in the various figures are represented by like reference numbers.
Figure 1 is a schematic view, shown in cross-section, of an embodiment of a condensing and collecting optical system not part of the present invention.
Figure 2 is a perspective view of a condensing and collecting optical system not part of the present invention.
Figure 3 is schematic view, shown in cross-section, of an alternate embodiment of the condensing and collecting optical system not part of the present invention.
Figure 4 is a schematic view, shown in cross-section, of another alternate embodiment of the condensing and collecting optical system of the present invention.
Figure 5a is a schematic view, shown in cross-section, of still another alternate embodiment of the condensing and collecting optical system of the present invention.
Figure 5b is an end view of the embodiment of Figure 5a viewed in the direction indicated by the line A-A.
Figure 6 is a perspective view of still another alternate embodiment of the condensing and collecting optical system of the present invention.
Figure 7a is a schematic view, shown in cross-section, of the embodiment of Figure 6 taken in the direction indicated by section line A-A.
Figure 7b is a schematic view, shown in cross-section, of the embodiment of Figure 6 taken in the direction of section line B-B.
Figures 8a-8f are schematic views of a plurality of polygonal waveguide targets in cross-sections which may be employed in embodiments of the present invention.
Figure 9 is a schematic view of a circular cross-section waveguide target which may be utilized in the present invention.
Figure 10a is a schematic side view illustrating an increasing taper waveguide target according to one embodiment of the invention.
Figure 10b is a schematic side view illustrating a decreasing taper waveguide target in accordance with another embodiment.

### Detailed Description of Exemplary Embodiments of the Invention

With reference to the figures, exemplary embodiments of the invention will now be described. These embodiments illustrate principles of the invention and should not be construed as limiting the scope of the invention.

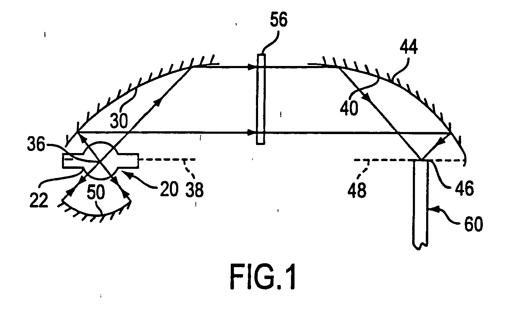

Referring to Figure 1 as showing a representative embodiment not being part of the present invention, the invention has associated therewith the following four main components:

### 1. Electromagnetic Source

The electromagnetic source 20 is preferably a light source having an envelope 22. Most preferably, the source 20 comprises an arc lamp such as a xenon lamp, a metal-halide lamp, an HID lamp, or a mercury lamp. For certain applications, filament lamps, e.g. halogen lamps, can be used, provided the system is modified to accommodate the non-opaque filaments of the lamp, as will be described in more detail below.

### 2. Collimating Reflector

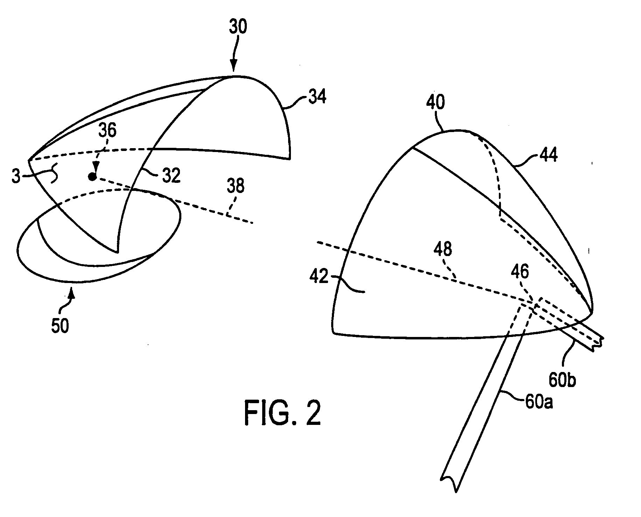

The collimating reflector 30 comprises a portion of a paraboloid of revolution having an optical axis 38 and a focal point 36. In the embodiment shown in Figure 2, the collimating reflector 30 comprises a first quadrant 32 and a second quadrant 34 of a paraboloid of revolution. Alternatively, the collimating reflector 30 may comprise a single quadrant, more or less, of a paraboloid of revolution. The collimating reflector 30 preferably has a reflective coating (e.g., aluminum or silver) and the surface is highly polished. For certain applications, the collimating reflector 30 can be made from glass coated with a wavelength-selective multilayer dielectric coating. For example, a cold coating with high reflectivity only in the visible wavelengths can be used for visual light applications. With the source 20 placed at the focal point 36 of the collimating reflector, electromagnetic radiation that contacts the reflector 30 will be reflected as a collimated beam parallel to the optical axis 38 of the reflector 30. Where the source 20 is an arc lamp, the arc gap is preferably small compared to the focal length of the collimating reflector 30.

### 3. Focusing Reflector

The focusing reflector 40 comprises a portion of a paraboloid of revolution having an optical axis 48 and a focal point 46. As shown in Figure 2, the focusing reflector 40 comprises a first quadrant 42 and second quadrant 44 of a paraboloid of revolution. Alternatively, the focusing reflector 40 may comprise a single quadrant, more or less, of a paraboloid of revolution. The focusing reflector 40 may be of slightly different shape, or may be of substantially the same size and substantially the same shape as the collimating reflector 30. For example, if the collimating reflector 30 comprises a single quadrant of a paraboloid of revolution, the focusing reflector 40 should be substantially a single quadrant of the same paraboloid of revolution.

The focusing reflector 40 is positioned and oriented so that the collimated electromagnetic radiation reflected by the collimating reflector 30 impinges the parabolic surface of the focusing reflector 40 and is thereafter focused toward the focal point 46 of the focusing reflector 40. In order to achieve unit magnification between the collimating reflector 30 and the focusing reflector 40 (i.e., a focused image that is substantially the same size as the source), it is important that each ray of electromagnetic radiation reflected and collimated by a surface portion of the collimating reflector 30 be reflected and focused by a corresponding surface portion of the focusing reflector 40 in order to achieve a focus at the focal point 46 that is of the maximum possible brightness. In the context of the present disclosure, orienting and positioning the collimating reflector 30 and the focusing reflector 40 with respect to each other so that each ray of electromagnetic radiation collimated by a surface portion of the collimating reflector 30 is focused by a corresponding surface portion of the focusing reflector 40 will be referred to as positioning the reflectors in "optical symmetry" with respect to each other.

### 4. Target

The target 60 is a small object requiring illumination with the highest intensity possible. In the preferred embodiment, the target 60 is a waveguide, such as a single core optic fiber, a fused bundle of optic fibers, a fiber bundle, or a homogenizer. An input end of the target, e.g. a proximal end of the optic fiber, is positioned at the focal point of the focusing reflector 40 to receive thereat the focused rays of electromagnetic radiation reflected by the focusing reflector 40.

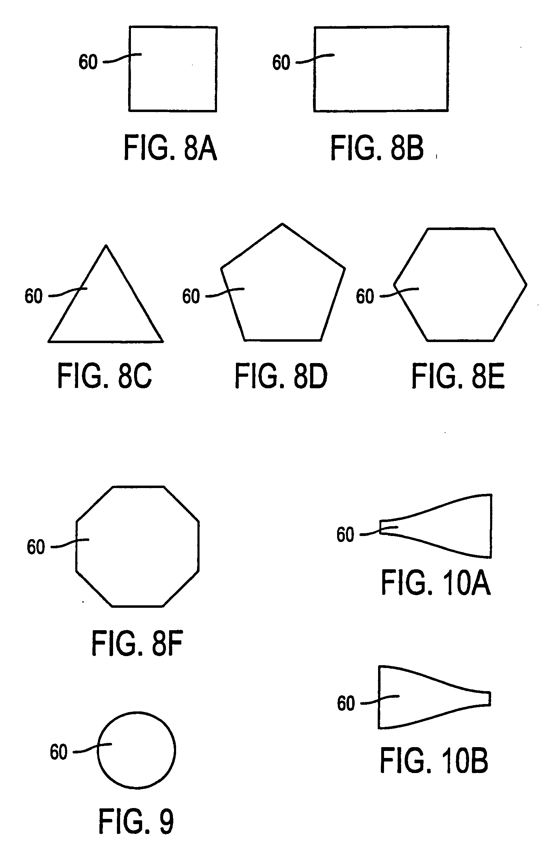

As noted above, the target 60 can be a waveguide, and can be polygonal in cross-section as shown in Figs. 8a-8f, or circular in cross-section as shown in Fig. 9. Further, target 60 can be an increasing taper waveguide as shown in Fig. 10a, or a decreasing taper waveguide as shown in Fig. 10b.

While the target and the source are intimately associated with the collecting and condensing system of the present invention, according to its broader aspects, the invention relates to the use of two parabolic reflectors of substantially the same size and shape arranged so as to be optically symmetric with respect to each other.

Continuing with the description of the collecting and condensing system, in the arrangement shown in Figure 1, the collimating reflector 30 and the focusing reflector 40 are positioned in an opposed, facing relation with respect to each other so as to be concave toward each other. Optical symmetry is achieved in the arrangement of Figure 1 by arranging the collimating reflector 30 and the focusing reflector 40 so that their respective optical axes 38 and 48 are collinear and so that the reflective surface of the collimating reflector 30 is an opposed, facing relation with the corresponding reflecting surface of the focusing reflector 40 achieving a unit magnification.

In an alternative embodiment, not being part of the present invention with reference to Figure 1, the collimating reflector 30 and focusing reflector 40 comprise a collimating/focusing reflector pair which is an ellipsoid/hyperboloid pair wherein one of the collimating and focusing reflectors 30 and 40, respectively, have a substantially ellipsoid shape and the other of the collimating and focusing reflectors 30 and 40, respectively, have a corresponding substantially hyperboloid shape, with each reflector of the ellipsoid/hyperboloid pair having a corresponding size and optical orientation with respect to each other so that each ray of radiation reflected by a surface portion of the collimating reflector 30 is reflected by a corresponding surface portion of the focusing reflector 40 toward the target so as to achieve preferably about unit magnification between the source and an image focused onto the target. Depending on applications, larger or smaller magnifications other than one can be used with reduced brightness, i.e., magnificiations of from about 0.5 to about 5.

As shown in Figure 2, not being part of the present invention where the collimating reflector comprises a first quadrant 32 and a second quadrant 34 of a paraboloid of revolution, and the focusing reflector 40 comprises a first quadrant 42 and a second quadrant 44 of a similarly-sized and shaped paraboloid of revolution, it is possible to accommodate two targets, namely fibers 60a and 60b, so as to achieve two independent outputs. In the illustrated embodiment, the output 60a receives electromagnetic radiation from the second quadrant 34 of the collimating reflector 30 and the second quadrant 44 of the focusing reflector 40. The output 60b receives electromagnetic radiation from the first quadrant 32 of the collimating reflector 30 and the first quadrant 42 of the focusing reflector 40. To allow simultaneous placement of the two fibers 60a and 60, the first quadrant 42 and the second quadrant 44 of the focusing reflector 40 must be spatially offset from one another by a small amount along the optical axis of the focusing reflector 40.

As shown in Figures 1 and 2, not being part of the present invention the collecting and condensing system of the present invention may incorporate the use of a retro-reflector 50, which, in the illustrated embodiment, is a spherical retro-reflector. The retro-reflector 50 is positioned to capture electromagnetic radiation emitted by the source 20 that would not otherwise impinge on the collimating reflector 30. More particularly, the spherical retro-reflector 50 is constructed and arranged so that radiation emitted by the source 20 in a direction away from the collimating reflector 30 is reflected by the retro-reflector 50 back through the focal point 36 of the collimating reflector 30 and thereafter toward the collimating reflector 30. This additional radiation reflected by the collimating reflector 30 is collimated and added to the radiation that impinges the collimating reflector 30 directly from the source 20 to thereby increase the intensity of the collimated radiation reflected toward the focusing reflector 40. Consequently, the intensity of the radiation at the focal point 46 of the focusing reflector 40 is also increased.

If a filament lamp is employed as the source 20, the retro-reflector cannot be oriented so that it focuses radiation back through the focal point 36 of the collimating reflector 30, because the retro-reflected radiation would be blocked by the opaque filaments located at the focal point 36. In this case, the position of the retro-reflector 50 should be adjusted so that the retro-reflected radiation does not pass precisely through the focal point 36.

As an alternative to a spherical retro-reflector, the retro-reflecting function can be performed by a two-dimensional corner cube array (not shown) with unit elements sized on the order of the arc size of the source 20 or smaller. Employing a two-dimensional corner cube array eliminates the need for precisely positioning a retro-reflector and will produce a tighter focus at the arc of the source 20.

As shown in Figure 1, not being part of the present invention because of the spacial distance separating the collimating reflector 30 and the focusing reflector 40, various optical elements, such as filter 56, may be inserted between the reflectors 30 and 40. Because the electromagnetic radiation transmitted between the reflectors 30 and 40 is collimated, such optical elements can be of simple shape and design. As shown in Figure 1, filter 56 is a planar filter.

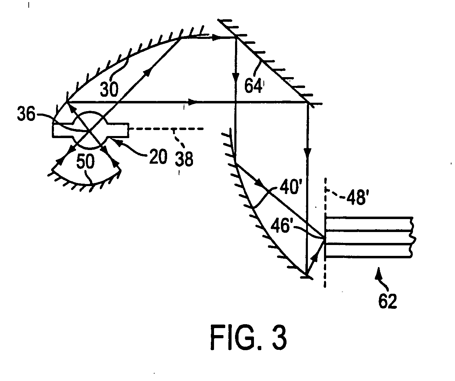

Figure 3 shows an alternate arrangement of the collecting and condensing system not being part of the present invention. In the arrangement of Figure 3, the target 62 is no longer a single optic fiber, but is a bundle of optic fiber 62 (although the arrangement shown could be used with any of the targets described above). Furthermore, in the arrangement of Figure 3, a focusing reflector 40', having an optical axis 48' and a focal point 46', is offset with respect to the collimating reflector 30. That is, the optical axis 48' of the focusing reflector 40' is not collinear with the optical axis 38 of the collimating reflector 30 as in the embodiment of Figures 1 and 2. Optical symmetry between the collimating reflector 30 and the focusing reflector 40' (i.e., unit magnification) is achieved by employing a focusing reflector 40' that is of substantially the same size and shape as the collimating reflector 30 and by precisely positioning a redirecting reflector 64 in the path of the collimated electromagnetic radiation reflected from the collimating reflector 30. The redirecting reflector 64 is a flat reflector so that the reflected radiation is also collimated. The redirecting reflector 64 and the focusing reflector 40' are precisely positioned so that the redirected, collimated radiation is reflected from corresponding surface portions of both the collimating reflector 30 and the focusing reflector 40'.

The arrangement shown in Figure 3 not being part of the present invention can be used in situations where spatial or other limitations do not permit the collimating reflector 30 and the focusing reflector 40' to be arranged with their respective optical axes 38, 48' collinear with each other. It should be appreciated that one or more additional redirecting reflectors may be employed to permit further spatial variation of the focusing reflector and the collimating reflector, so long as optical symmetry is maintained.

The redirecting reflector 64 may be a simple reflector, or it may be a reflective filter.

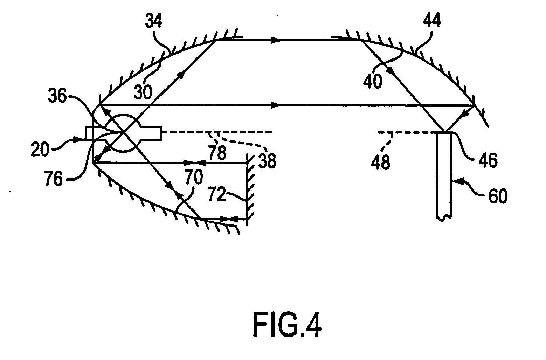

Another alternate arrangement of the collecting and condensing system of the present invention is shown in Figure 4. In the arrangement of Figure 4, the spherical retro-reflector 50 is replaced by a secondary collimating reflector 70 comprising a paraboloid of revolution having an optical axis 78 and focal point 76 that preferably coincide with the optical axis 38 and the focal point 36, respectively, of the collimating reflector 30. The secondary collimating reflector 70 is preferably of the same size and shape as the collimating reflector 30. That is, if the collimating reflector 30 comprises a single quadrant of a paraboloid of revolution, the secondary collimating reflector 70 would also comprise a single quadrant of a similar paraboloid of revolution.

A flat reflector 72 is positioned substantially perpendicularly to the optical axis 78 at an output end of the secondary collimating reflector 70. As shown in the figure, radiation emitted by the source 20 away from the collimating reflector 30 is reflected and collimated by the secondary collimating reflector 70. The collimated radiation reflected by the reflector 70, which is parallel to the optical axis 78, reflects off the flat reflector 72 back into the secondary collimating reflector 70 and is thereafter reflected back through the focal points 76 and 36 toward the collimating reflector 30, to thereby increase the intensity of the collimated radiation reflected toward the focusing reflector 40. Thus, the secondary collimating reflector 70 and the flat reflector 72 function together as a retro-reflector.

If the collimating and secondary collimating reflectors each comprise two quadrants of a paraboloid of revolution, so that together they define a full paraboloid of revolution, each secondary collimating reflector quadrant will retro-reflect radiation toward the diametrically-opposed collimating reflector quadrant.

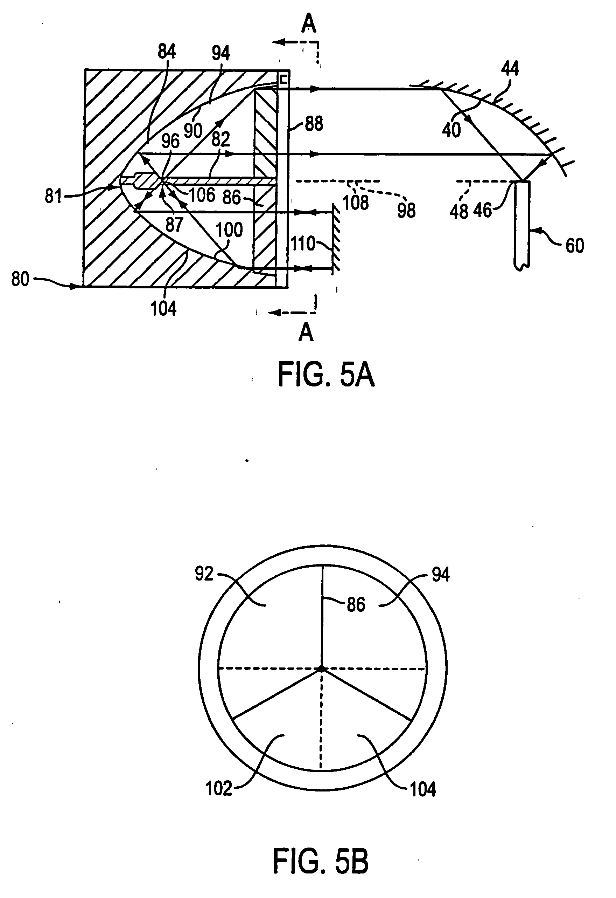

Another alternative arrangement of the collecting and condensing system of the present invention is shown in Figure 5a and 5b. In the arrangement of Figure 5a, the system includes a cermax lamp 80 having an anode 84, a cathode 82 supported by cathode support members 86, and an arc 87 between the anode and the cathode, which constitutes the source of the collecting and condensing system of Figure 5a. The cermax lamp 80 includes a parabolic mirror 81 covered at an open end thereof by a window 88. An upper half of the parabolic mirror 81, including first quadrant 92 and second quadrant 94 of the paraboloid of revolution, constitutes the collimating reflector 90 of the system. A lower half of the parabolic reflector 81, including the third quadrant 102 and the fourth quadrant 104 of the paraboloid of revolution, constitutes first and second quadrants, respectively, of a secondary collimating reflector 100. The collimating reflector 90 has a focal point 96 and an optical axis 98, and the secondary collimating reflector 100 has a focal point 106 and an optical axis 108 that coincide with the focal point 96 and the optical axis 98, respectively, of the collimating reflector 90. A flat reflector 110 is disposed in front of an open end of the secondary collimating reflector 100 and is arranged so as to be perpendicular to the optical axis 108 thereof.

Much as with the arrangement of Figure 4, radiation emitted at the arc 87 directly toward the collimating reflector 90 is reflected toward the focusing reflector 40 in collimated rays that are parallel to the optical axis 98. Radiation emitted by the arc 87 away from the collimating reflector 90 is reflected and collimated by the secondary collimating reflector 100 toward the flat reflector 110. The radiation is thereafter reflected by the flat reflector 110 back into the secondary collimating reflector 100 and through the focal point 96 to the collimating reflector 90. Thus, the secondary collimating reflector 100 and the flat reflector 110 together function as a retro-reflector. The retro-reflected radiation, together with the radiation emitted directly at the collimating reflector 90, is collimated by the first and second quadrants 92 and 94 of the collimating reflector 90 to become a parallel beam exiting the cermax lamp 80 through the window 88. To achieve unit magnification of the focused image at the target, a focusing reflector 40, having an optical axis 48 and a focal point 46, that is the same size and shape of the collimating reflector portion 90 of the cermax lamp is positioned in optical symmetry with respect to the collimating reflector 90. The collimated radiation reflected by the collimating reflector 90 will be focused by the focusing reflector 40 into a focused image having a size similar to the size of the arc 87.

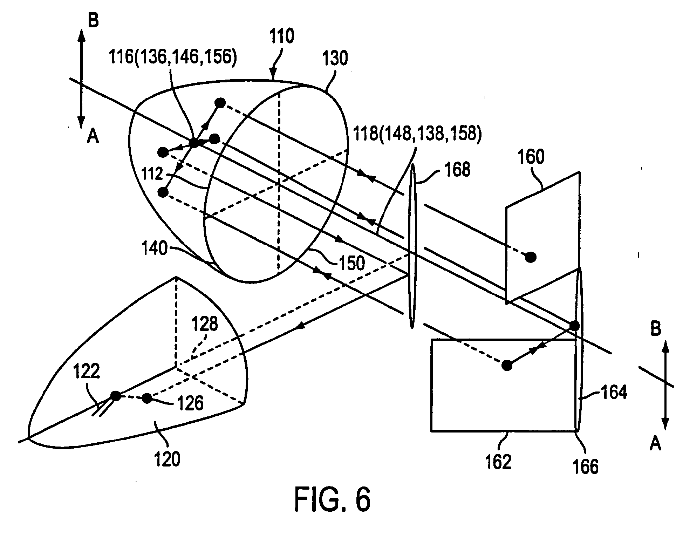

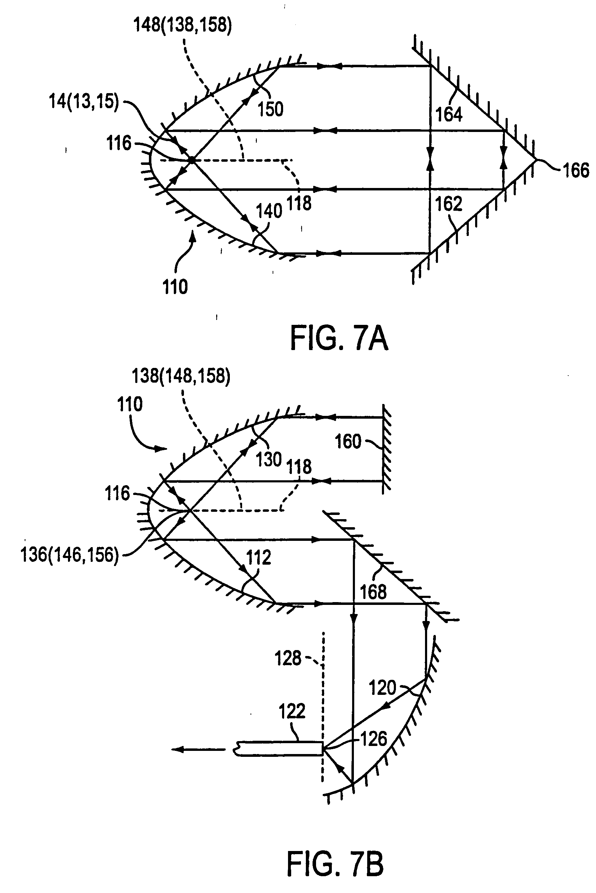

Figures 6 and 7 show another alternative arrangement of the collecting and condensing system of the present invention in which the reflective output of an entire paraboloid of revolution is collected and condensed into a focusing reflector 120 comprising a single quadrant of a paraboloid of revolution having an optical axis 128 and a focal point 126. In particular, the parabolic reflector 110 defines a collimating reflector 112 having an optical axis 118 and a focal point 116 and comprising a single quadrant of the paraboloid of revolution. The parabolic reflector 110 further defines a first secondary collimating reflector 130 having an optical axis 138 and focal point 136, a second secondary collimating reflector 140 having an optical axis 148 and a focal point 146, and a third secondary collimating reflector having an optical axis 158 and focal point 156. The focal points 116, 136, 146, and 156 preferably coincide with one another as do the optical axes 118, 138, 148, and 158.

A redirecting reflector 168 is operatively positioned with respect to the collimating reflector 112 so as to redirect the collimated reflected output of the reflector 112 toward the focusing reflector 120, which is positioned and arranged so as to be optically symmetric with respect to the collimating reflector 112. Reflector 168 may be a simple reflector or a reflective filter.

A first flat reflector 160 is operatively positioned in front of the first secondary collimating reflector 130 and is arranged so as to be perpendicular to the optical axis 138. Reflector 160 reflects the collimated output of the first secondary collimating reflector 130 back into the reflector 130, thus functioning as a retro-reflector. The retro-reflected radiation is thereafter reflected back through the focal point 136 toward the second secondary collimating reflector 140.

A second flat reflector 162 and a third flat reflector 164 are arranged at right angles to one another and are operatively positioned in front of the second secondary collimating reflector 140 and the third secondary collimating reflector 150, respectively. The apex 166 formed by the right angle intersecting second and third flat reflectors 162 and 164 is arranged at a right angle to the optical axes 118, 138, 148, and 158. The collimated output of the second secondary collimating reflector 140 is reflected from the second flat reflector 162 to the third flat reflector 164 and thereafter back to the third secondary collimating reflector 150. The thus retro-reflected radiation is directed by the third secondary collimating reflector 150 back through its focal point 156 to the collimating reflector 112 and thereafter to the focusing reflector 120 after being redirected by the redirecting reflector 168.

The collimated output of the third secondary collimating reflector 150 is reflected from the third flat reflector 164 to the second flat reflector 162 and is thereafter retro-reflected into the second secondary collimating reflector 140. The thus retro-reflected radiation is directed by the second secondary collimating reflector 140 back through the focal point 146 to the first secondary collimating reflector 130.

Accordingly, it can be appreciated that the light collected by each of the collimating quadrants 112, 130, 140, and 150 is concentrated and focused by the focusing reflector 120 into the target 122.

## Claims

1. An optical device comprising:
a source of electromagnetic radiation (20) located proximate to a focal point (36) of a collimating reflector (30) to produce collimate rays of radiation reflected from said collimating reflector in a direction substantially parallel to an optical axis (38) of said collimating reflector (30);
a target (60) to be illuminated with at least a portion of the electromagnetic radiation emitted by said source, and
a focusing reflector (40) comprising at least a portion (42, 44) of a paraboloid of revolution, said focusing reflector (40) having an optical axis (48) and a focal point (46) on said optical axis (48), said target (60) being located proximate said focal point (46) of said focusing reflector (40), said focusing reflector (40) being positioned and oriented with respect to said collimating reflector (30) so that the collimated rays of radiation reflected from said collimating reflector (30) are reflected by said focusing reflector (40) and focused substantially toward said target (60),
the collimating reflector (30) and the focusing reflector (40) comprising a collimating/focusing reflector pair selected from the group consisting of:
(a) a pair of reflectors, each reflector of the pair of reflectors comprising at least a portion (32, 34, 42, 44) of a substantial paraboloid of revolution and having about the same size and shape, with the collimating reflector (30) and focusing reflector (40) having a corresponding size and optical orientation with respect to each other so that substantially each ray of radiation reflected by a surface portion of said collimating reflector (30) is reflected by a corresponding surface portion of said focusing reflector (40) toward said target (60) so as to achieve substantially unit magnification between the source and an image focused onto said target (60), and
(b) a pair of reflectors comprising an ellipsoid/hyperboloid pair of collimating and focusing reflectors, with one of the collimating and focusing reflectors (30, 40) of the ellipsoid/hyperboloid pair having a substantially ellipsoid shape, and the other of the collimating and focusing reflectors (30, 40) having a corresponding substantially hyperboloid shape, with each reflector (30, 40) of the ellipsoid/hyperboloid pair having a corresponding size and optical orientation with respect to each other so that substantially each ray of radiation reflected by a surface portion of said collimating reflector (30) is reflected by a corresponding surface portion of said focusing reflector (40) toward said target (60) so as to achieve about unit magnification between the source and an image focused onto said target of from about 0.5 to about 5,
the optical device further comprising one or more additional reflectors (50, 64, 70, 72) constructed and arranged to reflect at least part of the portion of the electromagnetic radiation emitted by said source (20) that does not impinge directly on said collimating reflector (30) toward said collimating reflector (30) through the focal point (36) of said collimating reflector (30) to increase the flux intensity of the collimated rays,
said additional reflectors (50, 64, 70, 72) comprising :
a secondary collimating reflector (70) comprising a portion of a paraboloid of revolution having an optical axis (78) that substantially coincides with the optical axis (38) of said collimating reflector (30) and a focal point (76) that substantially coincides with the focal point (36) of said collimating reflector (30) so that electromagnetic radiation emitted from said source (20) in a direction away from said collimating reflector (30) produces collimated rays of electromagnetic radiation reflected from said secondary collimating reflector (70) in a direction parallel to the optical axis (78) of said secondary collimating reflector (70), and
a generally flat reflector (72) that is substantially perpendicular to the optical axis (78) of said secondary collimating reflector (70) and constructed and arranged to reflect the collimated rays of electromagnetic radiation reflected from said secondary collimating reflector (70) to produce collimated rays of electromagnetic radiation reflected from said flat reflector (72) in a direction parallel to the optical axis (38) of said secondary collimating reflector (70), the collimated rays reflected from said flat reflector (72) thereafter being reflected by said secondary collimating reflector (70) toward said collimating reflector (30) through the focal point (36) of said collimating reflector (70).

2. The optical device of claim 1, wherein about unit magnification is achieved between said source (20) and said image focused onto said target (60).

3. The optical device of claim 1, wherein said additional reflectors (50, 64, 70, 72) comprise a spherical retro-reflector (50) disposed on a side of said source (20) opposite said collimating reflector (30) to reflect electromagnetic radiation emitted from said source (20) in a direction away from said collimating reflector (30) toward said collimating reflector (30) through the focal point (36) of said collimating reflector (30).

4. The optical device of claim 2, wherein said collimating reflector (30) comprises one or two quadrants (32, 34) of a paraboloid of revolution.

5. The optical device of claim 4, wherein said focusing reflector (40) comprises the same number of quadrants of a paraboloid of revolution as comprises said collimating reflector (30).

6. The optical device of claim 1, wherein said collimating reflector (112) and said focusing reflector (120) each comprise a single quadrant of a paraboloid of revolution and said additional reflectors comprise:
first, second, and third secondary collimating reflectors (130, 140, 150), each comprising a quadrant of a paraboloid of revolution having optical axes (138, 148, 158) that substantially coincide with the optical axis of said collimating reflector (118) and focal points (136, 146, 156) substantially coincident with the focal point (116) of said collimating reflector so that electromagnetic radiation emitted from said source (20) in a direction away from said collimating reflector produces collimated rays of electromagnetic radiation reflected from said first, second, and third secondary collimating reflectors (130, 140, 150) in a direction parallel to the optical axes of said secondary collimating reflectors;
a redirecting reflector (168) positioned with respect to the collimating reflector (112) so as to redirect the collimated reflected output of the reflector (112) toward the focusing reflector (120),
a first generally flat reflector (160) that is substantially perpendicular to the optical axis (138) of said first secondary collimating reflector (130) and constructed and arranged to reflect the collimated rays of electromagnetic radiation reflected from said first secondary collimating reflector (130) to produce collimated rays of electromagnetic radiation reflected from said first flat reflector (160) in a direction parallel to the optical axis (138) of said first secondary collimating reflector (130), the collimated rays reflected from said first flat reflector (160) thereafter being reflected by said first secondary collimating reflector (130) toward said second secondary collimating reflector (140) through the focal point (146) of said second secondary collimating reflector (140); and
second and third generally flat reflectors (162, 164) oriented perpendicularly with respect to each other and operatively disposed in front of said second and third secondary collimating reflectors (140, 150), respectively, said second and third flat reflectors (140, 150) being constructed and arranged to:
(1) reflect the collimated rays of electromagnetic radiation reflected from said second secondary collimating reflector (162) from said second flat reflector (162) toward said third flat reflector (164) to produce collimated rays of electromagnetic radiation reflected from said third flat reflector (164) in a direction parallel to the optical axis (158) of said third secondary collimating reflector (150), the collimated rays reflected from said third flat reflector (164) thereafter being reflected by said third secondary collimating reflector (150) toward said collimating reflector (112) through the focal point (118) of said collimating reflector (112), and
(2) reflect the collimated rays of electromagnetic radiation reflected from said third secondary collimating reflector (150) from said third flat reflector (164) toward said second flat reflector (162) to produce collimated rays of electromagnetic radiation reflected from said second flat reflector (162) in a direction parallel to the optical axis (148) of said second secondary collimating reflector (140), the collimated rays reflected from said second flat reflector (162) thereafter being reflected by said second secondary collimating reflector (140) toward said first secondary collimating reflector through the focal point (136) of said first secondary collimating reflector (130).

7. The optical device of claim 1, wherein said source (20) comprises a light-emitting arc lamp.

8. The optical device of claim 7, wherein said arc lamp comprises a lamp selected from the group comprising a xenon lamp, a metal halide lamp, an HID lamp, or a mercury lamp.

9. The optical device of claim 1, wherein said source (20) comprises a filament lamp.

10. The optical device of claim 1. wherein said target (60) comprises a waveguide selected from the group comprising a single core optic fiber, a fiber bundle, a fused fiber bundle (62), or a homogenizer.

11. The optical device of claim 10 wherein said waveguide (60) is selected from the group consisting of circular cross-section waveguides, polygonal cross-section waveguides, tapered waveguides and combinations thereof.

12. The optical device of claim 1, wherein said optical axes (38. 48) of said collimating and focusing reflectors (30, 40) substantially coincide with one another and wherein said collimating and focusing reflectors (30, 40) are arranged in an opposed, facing relation with respect to each other.

13. The optical device of claim 1, wherein said optical axes (118, 12B) of said collimating and focusing reflectors (110, 120) are arranged at an angle with respect to each other and said optical device further comprises a redirecting reflector (168) constructed and arranged to reflect the collimated rays of electromagnetic radiation reflected from said collimating reflector (118) toward said focusing reflector (120).

14. The optical device of claim 1, further comprising a filter (56) disposed between said collimating reflector (30) and said focusing reflector (40) to filter the collimated rays of radiation reflected by said collimating reflector (30).

15. The optical device of claim 1, wherein said collimating reflector (30) and said focusing reflector (40) have substantially the same size and shape, and are oriented optically substantially symmetrically with respect to each other.

## Patentansprüche

1. Optische Vorrichtung, beinhaltend
eine nahe eines Brennpunktes (36) eines Kollimationsreflektors (30) angeordnete elektromagnetische Strahlungsquelle (20), um ausgehend vom besagten Kollimationsreflektor (30) in eine einer optischen Achse (38) des besagten Kollimationsreflektors (30) nahezu parallele Richtung kollimatierte gespiegelte Strahlungsbündel zu erzeugen;
eine mit wenigstens einem Teil der von der besagten Quelle ausgestrahlten elektromagnetischen Strahlung zu beleuchtende Zielscheibe (60), und
einen Fokalisationsreflektor (40), der wenigstens einen Teil (42, 44) eines Rotationsparaboloids aufweist, wobei der besagte Fokalisationsreflektor (40) über eine optische Achse (48) und einen auf der optischen Achse (48) befindlichen Brennpunkt (46) verfügt, wobei die besagte Zielscheibe (60) in der Nähe des besagten Brennpunktes (46) des besagten Fokalisationsreflektors (40) angeordnet ist, wobei der besagte Fokalisationsreflektor (40) derart zu dem Kollimationsreflektor (30) positioniert und ausgerichtet ist, dass die kollimatierten Bündel aus der ausgehend von dem besagten Kollimationsreflektor (30) reflektierten Strahlung von dem besagten Fokalisationsreflektor (40) reflektiert und nahezu zu der besagten Zielscheibe fokalisiert werden,
wobei der Kollimationsreflektor (30) und der Fokalisationsreflektor (40) ein Kollimations- /Fokalisationsreflektorpaar aufweisen, das aus der Gruppe, beinhaltend:
(a) ein Reflektorpaar, wobei jeder Reflektor des Reflektorpaares aus wenigstens einem Teil (32, 34, 42, 44) eines bedeutenden Rotationsparaboloids besteht und ungefähr die gleiche Größe und die gleiche Form hat, wobei der Kollimationsreflektor (30) und der Fokalisationsreflektor (40) zueinander eine entsprechende Größe und Ausrichtung haben, so dass jeder von einem Oberflächenteil des besagten Kollimationsreflektors (30) reflektierte Strahlungsbündel nahezu von einem korrespondierenden Oberflächenteil des besagten Fokalisationsreflektors (40) nach der besagten Zielscheibe (60) reflektiert wird, um annähernd eine Vergrößerung im Verhältnis eins zu eins zwischen der Quelle und einem auf der besagten Zielscheibe (60) fokalisierten Bild zu erreichen, und
(b) ein ein eillipsoidisches / hyperboloidisches Paar aus Kollimationsreflektor und Fokalisationsreflektor aufweisende Reflektorpaar, wobei einer von den eillipsoidischen /hyperboloidischen Kollimations- und Fokalisationsreflektoren (30, 40) eine weitgehend ellipsoidische Form und der andere von den eillipsoidischen / hyperboloidischen Kollimations- und Fokalisationsreflektoren (30, 40) eine korrespondierende weitgehend hyperboloidische Form aufweist, wobei jeder Reflektor (30, 40) des eillipsoidischen / hyperboloidischen Paares eine Größe und eine entsprechende optische Ausrichtung zueinander aufweist, so dass jeder von einem Flächenteil des besagten Kollimationsreflektors (30) reflektierte Strahlungsbündel annähernd von einem korrespondierenden Flächenteil des besagten Fokalisationsreflektors (40) auf die besagte Zielscheibe (60) zu reflektiert wird, um eine Vergrößerung nahe eins, zwischen 0,5 und ungefähr 5, zwischen der Quelle und einem auf die besagte Zielscheibe fokalisierten Bild zu erreichen,
ausgewählt wird,
wobei die optische Vorrichtung außerdem einen oder mehrere zusätzliche Reflektoren (50, 64, 70, 72) aufweist, die aufgebaut und angeordnet sind, um wenigstens einen Teil des von der besagten Quelle (20) ausgestrahlten Strahlungsteiles zu reflektieren, der nicht direkt nach dem besagten Kollimationsreflektor (30) den besagten Kollimationsreflektor (30) durch den besagten Brennpunkte (36) des besagten Kollimationsreflektors (30) erreicht, um die Intensität des Flusses des kollimatierten Bündels zu erhöhen,
wobei die besagten zusätzlichen Reflektoren (50, 64, 70, 72):
einen Sekundärkollimationsreflektor (70) mit einem Teil eines Rotationsparaboloids, das über eine optische Achse (78), die im Wesentlichen mit der optischen Achse (38) des besagten Kollimationsreflektors (30) übereinstimmt, und einen Brennpunkt (76) verfügt, der im Wesentlichen mit dem Brennpunkt (36) des besagten Kollimationsreflektors (30) übereinstimmt, so dass die ausgehend von der besagten Quelle (20) weg von dem besagten Kollimationsreflektor (30) ausgesandte elektromagnetischen Strahlung kollimatierte, ausgehend von dem Sekundärkollimationsreflektor (70) in eine zur optische Achse (78) des besagten Sekundärkollimationsreflektor (70) parallelen Richtung reflektierte elektromagnetische Strahlungsbündel bewirkt, und
einen in der Regel flachen Reflektor (72), der weitgehend senkrecht zu der optische Achse (78) des besagten Sekundärkollimationsreflektors (70) und derart aufgebaut und angeordnet ist, dass er die ausgehend von dem Sekundärkollimationsreflektor (70) reflektierten kollimatierten elektromagnetischen Strahlungsbündel reflektiert, um ausgehend von dem besagten flachen Reflektor (72) in eine der optischen Achse (38) des besagten Sekundärkollimationsreflektors (70) parallele Richtung reflektierte kollimatierte elektromagnetische Strahlungsbündel zu erzeugen, wobei die kollimatierten ausgehend von dem flachen Reflektor (72) reflektierten Bündel danach von dem besagten Sekundärkollimationsreflektor (70) durch den Brennpunkt (36) des besagten Sekundärkollimationsreflektors (70) hindurch zu dem besagten Kollimationsreflektor (30) reflektiert werden,
aufweisen.

2. Optische Vorrichtung nach Anspruch 1, in welcher eine ungefähre eins-Vergrößerung zwischen der besagten Quelle (20) und dem besagten auf der besagten Zielscheibe (60) fokalisierten Bild erreicht wird.

3. Optische Vorrichtung nach Anspruch 1, in dem die besagten Zusatzreflektoren (50, 64, 70, 72) einen sphärischen Rückreflektor (50) aufweisen, das an einer Seite der besagten Quelle (20) gegenüber von dem besagten Kollimationsreflektor (30) angeordnet ist, um die von der besagten Quelle (20) in entgegengesetzte Richtung zum besagten Kollimationsreflektor (30) ausgestrahlte elektromagnetische Strahlung durch den Brennpunkte (36) des besagten Kollimationsreflektors (30) zum besagten Kollimationsreflektor (30) zu reflektieren.

4. Optische Vorrichtung nach Anspruch 2, in der der besagte Kollimationsreflektor (30) einen oder zwei Quadranten eines Rotationsparaboloids aufweist.

5. Optische Vorrichtung nach Anspruch 4, in der der besagte Fokalisationsreflektor (40) die gleiche Anzahl an Quadranten eines Rotationsparaboloids wie der besagte Kollimationsreflektor (30) aufweist.

6. Optische Vorrichtung nach Anspruch 1, in der der besagte Kollimationsreflektor (112) und der besagte Fokalisationsreflektor (120) jeweils einen einzigen Quadranten eines Rotationsparaboloids aufweisen, und die besagten Zusatzreflektoren
einen ersten, zweiten und dritten sekundären Kollimationsreflektor (130, 140, 150), welche jeweils einen Quadrant eines Rotationsparaboloids aufweisen, das über optische Achsen (138, 148, 158), die annähernd mit der optischen Achse des besagten Kollimationsreflektors (118) übereinstimmen, und über Brennpunkte (136, 146, 156) verfügt, die annähernd mit dem Brennpunkt (116) des besagten Kollimationsreflektors übereinstimmen, so dass die ausgehend von der besagten Quelle (20) weg von dem Kollimationsreflektor gesendete elektromagnetische Strahlung kollimatierte, von dem besagten ersten, zweiten und dritten sekundären Kollimationsreflektor (130, 140, 150) reflektierte elektromagnetische Strahlungsbündel in eine zu den optischen Achsen der besagten ersten, zweiten und dritten sekundären Kollimationsreflektoren parallele Richtung bewirkt;
einen gegenüber dem Kollimationsreflektor (112) derartig positionierten Umlenkungsreflektor (168), dass der reflektierte kollimatierte Ausgang des Reflektors (112) zu dem Fokalisationsreflektor (120) umgelenkt wird,
einen ersten im Allgemeinem flachen Reflektor (160), welcher annähernd senkrecht zu der optischen Achse (138) des besagten ersten sekundären Kollimationsreflektors (130) ist und um die ausgehend von dem besagten ersten sekundären Kollimationsreflektor (130) reflektierten, kollimatierten elektromagnetischen Strahlungsbündel zu reflektieren, aufgebaut und angeordnet ist, um von dem besagten ersten flachen Reflektor (160) in eine zu der optischen Achse (138) des besagten ersten sekundären Kollimationsreflektors (130) parallele Richtung reflektierte kollimatierte elektromagnetische Strahlungsbündel zu erzeugen, wobei die kollimatierten, ausgehend von dem ersten flachen Reflektor (160) reflektierten Bündel nachher von dem besagten ersten sekundären Kollimationsreflektor (130) nach dem besagten zweiten sekundären Kollimationsreflektor (140) durch den Brennpunkt (146) des besagten zweiten sekundären Kollimationsreflektors (140) reflektiert werden; und
einen zweiten und einen dritten, senkrecht zueinander ausgerichteten und im Einsatz gegenüber der besagten zweiten und dritten sekundären Kollimationsreflektoren (140, 150) angeordneten, im Allgemeinen flachen Reflektor (162, 164) aufweisen, bzw. wobei besagte zweite und dritte flache Reflektoren (162, 164) so aufgebaut und angeordnet sind, dass:
(1) sie die ausgehend von dem zweiten sekundären Kollimationsreflektor (140), ausgehend von dem zweiten flachen Reflektor (162) nach dem besagten dritten flachen Reflektor (164) reflektierten, kollimatierten elektromagnetischen Strahlungsbündel reflektieren, um ausgehend von dem besagten dritten flachen Reflektor (164) in eine zu der optischen Achse (158) des besagten dritten sekundären Kollimationsreflektors (150) parallele Richtung reflektierte kollimatierte elektromagnetische Strahlungsbündel zu erzeugen, wobei die ausgehend von dem dritten flachen Reflektor (164) reflektierten kollimatierten Bündel danach von dem besagten dritten sekundären Kollimationsreflektor (150) nach dem besagten Kollimationsreflektor (112) durch den Brennpunkt (118) des besagten Kollimationsreflektors (112) reflektiert werden, und
(2) sie die ausgehend von dem besagten dritten sekundären Kollimationsreflektor (150), ausgehend von dem besagten dritten flachen Reflektor (164) nach dem besagten zweiten flachen Reflektor (162) reflektierten kollimatierten elektromagnetischen Strahlungsbündel reflektieren, um kollimatierte, ausgehend von dem besagten zweiten flachen Reflektor (162) in eine Richtung reflektierte elektromagnetische Strahlungsbündel zu erzeugen, die parallel zu der optischen Achse (148) des besagten zweiten sekundären Kollimationsreflektors (140) sind, wobei die ausgehend von dem besagten zweiten flachen Reflektor (162) reflektierten kollimatierten Bündel danach von dem zweiten sekundären Kollimationsreflektor (140) nach dem besagten ersten sekundären Kollimationsreflektor durch den Brennpunkt (136) des besagten erste sekundäre Kollimationsreflektors (130) reflektiert werden.

7. Optische Vorrichtung nach Anspruch 1, in der die besagte Quelle (20) eine lichtemittierende Bogenlampe aufweist.

8. Optische Vorrichtung nach Anspruch 7, in der die besagte Bogenlampe eine aus der Gruppe bestehend aus einer Xenonlampe, einer Metallhalogenidlampe, einer HID-Lampe oder einer Quecksilberlampe ausgewählte Lampe aufweist.

9. Optische Vorrichtung nach Anspruch 1, in der die besagte Quelle (20) eine Glühlampe aufweist.

10. Optische Vorrichtung nach Anspruch 1, in der die besagte Zielscheibe (60) einen aus einer aus einer einkernigen Faser, einem Faserbündel, einem geschmolzenen Faserbündel (62), oder einem Homogenisierer bestehenden Gruppe ausgewählten Wellenleiter aufweist.

11. Optische Vorrichtung nach Anspruch 10, in der der besagte Wellenleiter (60) aus der aus Wellenleitern mit kreisförmigem Querschnitt, aus Wellenleitern mit polygonalem Querschnitt, aus konischen Wellenleitern und aus Kombinationen davon bestehenden Gruppe ausgewählt ist.

12. Optische Vorrichtung nach Anspruch 1, in der die besagten optischen Achsen (38, 48) der besagten Kollimations- und Fokalisationsreflektoren (30, 40) annähernd zueinander übereinstimmen und in der die besagten Kollimations- und Fokalisationsreflektoren (30, 40) einander gegenüber angeordnet sind.

13. Optische Vorrichtung nach Anspruch 1, in der die besagten optischen Achsen (118, 128) der besagten Kollimations- und Fokalisationsreflektoren (110, 120) unter Bildung eines Winkels zueinander angeordnet sind, und die besagte optische Vorrichtung außerdem einen zum Reflektieren der kollimatierten, ausgehend von dem besagten Kollimationsreflektor (118) nach dem besagten Fokalisationsreflektor (120) reflektierten elektromagnetischen Strahlungsbündel aufgebauten und angeordneten Umlenkungsreflektor (168) aufweist.

14. Optische Vorrichtung nach Anspruch 1, die außerdem zum Filtrieren des kollimatierten von dem besagten Kollimationsreflektor (30) reflektierten Strahlungsbündels ein zwischen dem besagten Kollimationsreflektor (30) und dem besagten Fokalisationsreflektor (40) angeordnetes Filter (56) aufweist.

15. Optische Vorrichtung nach Anspruch 1, in der der besagte Kollimationsreflektor (30) und der besagten Fokalisationsreflektor (40) annähernd die gleiche Größe und die gleiche Form haben, und optisch annähernd symmetrisch zueinander ausgerichtet sind.

## Revendications

1. Dispositif optique comprenant,
une source de rayonnement électromagnétique (20) située à proximité d'un point focal (36) d'un réflecteur (30) de collimation afin de produire des faisceaux collimatés de rayonnement réfléchis depuis ledit réflecteur de collimation dans une direction sensiblement parallèle à un axe optique (38) dudit réflecteur (30) de collimation ;
une cible (60) à éclairer avec au moins une partie du rayonnement électromagnétique émis par ladite source, et
un réflecteur (40) de focalisation comprenant au moins une partie (42, 44) d'un paraboloïde de révolution, ledit réflecteur (40) de focalisation disposant d'un axe optique (48) et d'un point focal (46) sur ledit axe optique (48), ladite cible (60) étant située à proximité dudit point focal (46) dudit réflecteur (40) de focalisation, ledit réflecteur (40) de focalisation étant positionné et orienté par rapport audit réflecteur (30) de collimation de sorte que les faisceaux collimatés de rayonnement réfléchis depuis ledit réflecteur (30) de collimation soient réfléchis par ledit réflecteur (40) de focalisation et focalisés sensiblement vers ladite cible (60),
le réflecteur (30) de collimation et le réflecteur (40) de focalisation comprenant une paire de réflecteurs de collimation/de focalisation sélectionnés à partir du groupe constitué :
(a) d'une paire de réflecteurs, chaque réflecteur de la paire de réflecteurs comprenant au moins une partie (32, 34, 42, 44) d'un important paraboloïde de révolution et ayant environ la même taille et la même forme, le réflecteur (30) de collimation et le réflecteur (40) de focalisation ayant une taille et une orientation optique correspondantes l'un par rapport à l'autre de sorte que chaque faisceau de rayonnement réfléchi par une partie de surface dudit réflecteur (30) de collimation soit sensiblement réfléchi par une partie de surface correspondante dudit réflecteur (40) de focalisation vers ladite cible (60) afin d'obtenir un grossissement de l'unité sensible entre la source et une image focalisée sur ladite cible (60), et
(b) d'une paire de réflecteurs comprenant une paire ellipsoïdale/hyperboloïdale de réflecteurs de collimation et de focalisation, avec l'un parmi les réflecteurs (30, 40) de collimation et de focalisation de la paire ellipsoïdale/hyperboloïdale ayant une forme sensiblement ellipsoïdale, et l'autre parmi les réflecteurs (30, 40) de collimation et de focalisation ayant une forme sensiblement hyperboloïdale correspondante, chaque réflecteur (30, 40) de la paire ellipsoïdale/hyperboloïdale ayant une taille et une orientation optique correspondantes l'un par rapport à l'autre de sorte que chaque faisceau de rayonnement réfléchi par une partie de surface dudit réflecteur (30) de collimation soit sensiblement réfléchi par une partie de surface correspondante dudit réflecteur (40) de focalisation vers ladite cible (60) afin d'obtenir un grossissement voisin de l'unité entre la source et une image focalisée sur ladite cible compris entre environ 0,5 et environ 5,
le dispositif optique comprenant en outre un ou plusieurs réflecteurs (50, 64, 70, 72) supplémentaires construits et disposés afin de réfléchir au moins une partie de la partie du rayonnement électromagnétique émis par ladite source (20) qui n'atteint pas directement ledit réflecteur (30) de collimation vers ledit réflecteur (30) de collimation à travers le point focal (36) dudit réflecteur (30) de collimation afin d'augmenter l'intensité du flux des faisceaux collimatés,
lesdits réflecteurs (50, 64, 70, 72) supplémentaires comprenant :
un réflecteur (70) de collimation secondaire comprenant une partie d'un paraboloïde de révolution disposant d'un axe optique (78) qui coïncide sensiblement avec l'axe optique (38) dudit réflecteur (30) de collimation et un point focal (76) qui coïncide sensiblement avec le point focal (36) dudit réflecteur (30) de collimation de sorte que le rayonnement électromagnétique émis depuis ladite source (20) en s'éloignant dudit réflecteur (30) de collimation produise des faisceaux collimatés de rayonnement électromagnétique réfléchis depuis ledit réflecteur (70) de collimation secondaire dans une direction parallèle à l'axe optique (78) dudit réflecteur (70) de collimation secondaire, et
un réflecteur (72) généralement plat qui est sensiblement perpendiculaire à l'axe optique (78) dudit réflecteur (70) de collimation secondaire et construit et disposé afin de réfléchir les faisceaux collimatés de rayonnement électromagnétique réfléchis depuis ledit réflecteur (70) de collimation secondaire afin de produire des faisceaux collimatés de rayonnement électromagnétique réfléchis depuis ledit réflecteur (72) plat dans une direction parallèle à l'axe optique (38) dudit réflecteur (70) de collimation secondaire, les faisceaux collimatés réfléchis depuis ledit réflecteur (72) plat étant ensuite réfléchis par ledit réflecteur (70) de collimation secondaire vers ledit réflecteur (30) de collimation à travers le point focal (36) dudit réflecteur (70) de collimation.

2. Dispositif optique selon la revendication 1, dans lequel un grossissement voisin de l'unité est réalisé entre ladite source (20) et ladite image focalisée sur ladite cible (60).

3. Dispositif optique selon la revendication 1, dans lequel lesdits réflecteurs (50, 64, 70, 72) supplémentaires comprennent un rétroréflecteur (50) sphérique disposé sur un côté de ladite source (20) à l'opposé dudit réflecteur (30) de collimation afin de réfléchir le rayonnement électromagnétique émis depuis ladite source (20) en sens inverse dudit réflecteur (30) de collimation vers ledit réflecteur (30) de collimation à travers le point focal (36) dudit réflecteur (30) de collimation.

4. Dispositif optique selon la revendication 2, dans lequel ledit réflecteur (30) de collimation comprend un ou deux quadrants (32, 34) d'un paraboloïde de révolution.

5. Dispositif optique selon la revendication 4, dans lequel ledit réflecteur (40) de focalisation comprend le même nombre de quadrants d'un paraboloïde de révolution que ledit réflecteur (30) de collimation.

6. Dispositif optique selon la revendication 1, dans lequel ledit réflecteur (112) de collimation et ledit réflecteur (120) de focalisation comprennent chacun un seul quadrant d'un paraboloïde de révolution et lesdits réflecteurs supplémentaires comprennent :
les premier, deuxième et troisième réflecteurs (130, 140, 150) de collimation secondaires, comprenant chacun un quadrant d'un paraboloïde de révolution disposant d'axes optiques (138, 148, 158) qui coïncident sensiblement avec l'axe optique dudit réflecteur (118) de collimation et de points focaux (136, 146, 156) qui coïncident sensiblement avec le point focal (116) dudit réflecteur de collimation de sorte que le rayonnement électromagnétique émis depuis ladite source (20) en s'éloignant dudit réflecteur de collimation produise des faisceaux collimatés de rayonnement électromagnétique réfléchis depuis lesdits premier, deuxième et troisième réflecteurs (130, 140, 150) de collimation secondaires dans une direction parallèle aux axes optiques desdits réflecteurs de collimation secondaires ;
un réflecteur (168) de réorientation positionné par rapport au réflecteur (112) de collimation afin de réorienter la sortie réfléchie collimatée du réflecteur (112) vers le réflecteur (120) de focalisation,
un premier réflecteur (160) généralement plat qui est sensiblement perpendiculaire à l'axe optique (138) dudit premier réflecteur (130) de collimation secondaire et construit et disposé afin de réfléchir les faisceaux collimatés de rayonnement électromagnétique réfléchis depuis ledit premier réflecteur (130) de collimation secondaire afin de produire des faisceaux collimatés de rayonnement électromagnétique réfléchis depuis ledit premier réflecteur (160) plat dans une direction parallèle à l'axe optique (138) dudit premier réflecteur (130) de collimation secondaire, les faisceaux collimatés réfléchis depuis ledit premier réflecteur (160) plat étant ensuite réfléchis par ledit premier réflecteur (130) de collimation secondaire vers ledit deuxième réflecteur (140) de collimation secondaire à travers le point focal (146) dudit deuxième réflecteur (140) de collimation secondaire ; et
les deuxième et troisième réflecteurs (162, 164) généralement plats orientés perpendiculairement l'un par rapport à l'autre et disposés de manière opérationnelle en face desdits deuxième et troisième réflecteurs (140, 150) de collimation secondaires, respectivement, lesdits deuxième et troisième réflecteurs (162, 164) plats étant construits et disposés afin de :
(1) réfléchir les faisceaux collimatés de rayonnement électromagnétique réfléchis depuis ledit deuxième réflecteur de (140) collimation secondaire depuis ledit deuxième réflecteur (162) plat vers ledit troisième réflecteur (164) plat afin de produire des faisceaux collimatés de rayonnement électromagnétique réfléchis depuis ledit troisième réflecteur (164) plat dans une direction parallèle à l'axe optique (158) dudit troisième réflecteur (150) de collimation secondaire, les faisceaux collimatés réfléchis depuis ledit troisième réflecteur (164) plat étant ensuite réfléchis par ledit troisième réflecteur (150) de collimation secondaire vers ledit réflecteur (112) de collimation à travers le point focal (118) dudit réflecteur (112) de collimation, et
(2) réfléchir les faisceaux collimatés de rayonnement électromagnétique réfléchis depuis ledit troisième réflecteur (150) de collimation secondaire depuis ledit troisième réflecteur (164) plat vers ledit deuxième réflecteur (162) plat afin de produire des faisceaux collimatés de rayonnement électromagnétique réfléchis depuis ledit deuxième réflecteur (162) plat dans une direction parallèle à l'axe optique (148) dudit deuxième réflecteur (140) de collimation secondaire, les faisceaux collimatés réfléchis depuis ledit deuxième réflecteur (162) plat étant ensuite réfléchis par ledit deuxième réflecteur (140) de collimation secondaire vers ledit premier réflecteur de collimation secondaire à travers le point focal (136) dudit premier réflecteur (130) de collimation secondaire.

7. Dispositif optique selon la revendication 1, dans lequel ladite source (20) comprend une lampe à arc photoémettrice.

8. Dispositif optique selon la revendication 7, dans lequel ladite lampe à arc comprend une lampe sélectionnée à partir du groupe comprenant une lampe au xénon, une lampe aux halogénures métalliques, une lampe DHI ou une lampe au mercure.

9. Dispositif optique selon la revendication 1, dans lequel ladite source (20) comprend une lampe à incandescence.

10. Dispositif optique selon la revendication 1, dans lequel ladite cible (60) comprend un guide d'ondes sélectionné dans le groupe comprenant une fibre optique à noyau unique, un faisceau de fibres, un faisceau (62) de fibres condensé ou un homogénéisateur.

11. Dispositif optique selon la revendication 10 dans lequel ledit guide d'ondes (60) est sélectionné à partir du groupe constitué de guides d'ondes en coupe transversale circulaires, de guides d'ondes en coupe transversale polygonaux, de guides d'ondes coniques et de combinaisons de ceux-ci.

12. Dispositif optique selon la revendication 1, dans lequel lesdits axes optiques (38, 48) desdits réflecteurs (30, 40) de collimation et de focalisation coïncident sensiblement l'un avec l'autre et dans lequel lesdits réflecteurs (30, 40) de collimation et de focalisation sont disposés en face l'un de l'autre de manière opposée.

13. Dispositif optique selon la revendication 1, dans lequel lesdits axes optiques (118, 128) desdits réflecteurs (110, 120) de collimation et de focalisation sont disposés en formant un angle l'un par rapport à l'autre et ledit dispositif optique comprend en outre un réflecteur (168) de réorientation construit et disposé afin de réfléchir les faisceaux collimatés de rayonnement électromagnétique réfléchis depuis ledit réflecteur (118) de collimation vers ledit réflecteur (120) de focalisation.

14. Dispositif optique selon la revendication 1, comprenant en outre un filtre (56) disposé entre ledit réflecteur (30) de collimation et ledit réflecteur (40) de focalisation afin de filtrer les faisceaux collimatés de rayonnement réfléchis par ledit réflecteur (30) de collimation.

15. Dispositif optique selon la revendication 1, dans lequel ledit réflecteur (30) de collimation et ledit réflecteur (40) de focalisation ont sensiblement la même taille et la même forme, et sont orientés optiquement de façon sensiblement symétrique l'un par rapport à l'autre.
